# EUROPÄISCHE PATENTSCHRIFT

(11) **EP 2 592 397 B1**
(45) Veröffentlichungstag und Bekanntmachung des Hinweises auf die Patenterteilung: **05.08.2015**
(21) Anmeldenummer: 11188443.3
(22) Anmeldetag: 09.11.2011
(51) Int. Cl.: G01F 23/296

(54) **Vibrationsgrenzschalter**
Vibration-type level switch
Interrupteur de fin de course du type vibrant

(43) Veröffentlichungstag der Anmeldung: 15.05.2013
(73) Patentinhaber: VEGA Grieshaber KG, 77709 Wolfach (DE)
(72) Erfinder: Mellert, Martin, 77790 Steinach (DE); Gruhler, Holger, 78609 Tuningen (DE); Jacob, Jörn, 77709 Wolfach (DE)
(74) Vertreter: Westphal, Mussgnug & Partner Patentanwälte mbB

(56) Entgegenhaltungen:
- DE-A1- 19 720 519
- US-A1- 2006 290 524

## Beschreibung

Die vorliegende Erfindung betrifft einen Vibrationsgrenzschalter gemäß dem Oberbegriff des Patentanspruchs 1.

Die Grenzstanderfassung spielt in industriellen Prozessen insbesondere für Flüssigkeiten und Schüttgüter eine große Rolle. Bei der Grenzstanderfassung wird das Erreichen einer definierten Füllhöhe erfasst und in einen Schaltbefehl umgewandelt. Der Schaltbefehl startet oder stoppt dann zum Beispiel eine Befülleinrichtung, so dass ein Überfüllen eines Behältnisses verhindert wird. Eine Grenzstanderfassung ist beispielsweise in Flüssigkeiten, Pasten, Pulvern oder groben Schüttgütern realisierbar.

Vibrationsgrenzschalter, wie sie aus dem Stand der Technik bekannt sind weisen eine piezoelektrische Sende- und/oder Empfangseirtheit, eine in Schwingung versetzbare Membran und eine mechanische Schwingungsanordnung auf, die mit der Membran gekoppelt ist, wobei die piezoelektrische Sende- und/oder Empfangseinheit direkt oder über eine Anpassungsschicht mittels einer Klebeschicht mit der Membran verklebt ist. Eine Verklebung der piezoelektrischen Sende- und/oder Empfangseinheit mit der Membran weist gegenüber einer Ankopplung über einen Zugbolzen, mittels dessen die Sende- und/oder Empfangseinheit mit der Membran verspannt ist, einen deutlich einfacheren Aufbau auf und ermöglicht dadurch eine günstigere Herstellung des Vibrationsgrenzschalters.

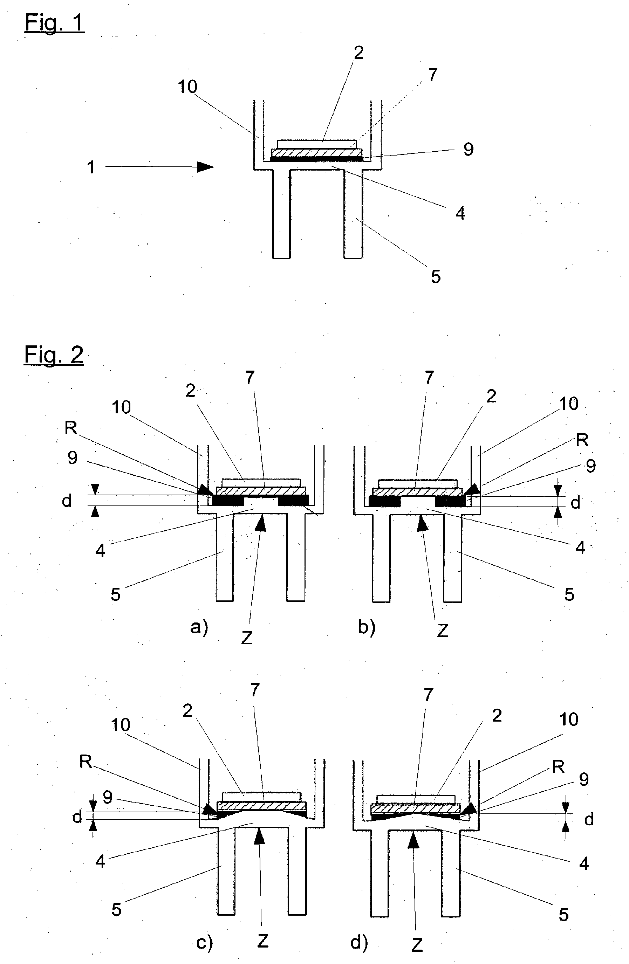

Figur 1 zeigt einen Schnitt durch einen Vibrationsgrenzschalter 1, wie er aus dem Stand der Technik bekannt ist. Der dargestellte Vibrationsgrenzschalter weist ein Gehäuse 10 auf, das vorderseitig durch eine in Schwingung versetzbare Membran 4 abgeschlossen ist. Die Membran 4 ist in der Regel kreisförmig ausgestaltet und weist wie in Figur 1 dargestellt, eine durchgehend gleichmäßige Dicke auf. An der Membran 4 ist vorderseitig eine mechanische Schwingungsanordnung 5, die im vorliegenden Ausführungsbeispiel als Schwinggabel ausgestaltet ist, angeordnet. Durch Schwingungen der Membran 4 wird die Schwinggabel 5 auf ihrer Resonanzfrequenz angeregt und beginnt mit dieser Frequenz zu schwingen. Bei einer Bedeckung der Schwinggabel 5 mit Füllgut sinkt die Frequenz der Schwinggabel 5, sodass das Erreichen eines Grenzstandes detektiert und in ein Schaltsignal umgesetzt werden kann.

Die Membran 4 ist über eine innerhalb des Gehäuses 10 angeordnete piezoelektrische Sende- und/oder Empfangseinheit 2 in Schwingung versetzbar. Die piezoelektrische Sende- und/oder Empfangseinheit 2, nachfolgend auch Piezoantrieb genannt, ist im vorliegenden Ausführungsbeispiel über eine Anpassungsschicht 7 mit der Membran 4 verklebt. Sowohl die Anpassungsschicht 7 als auch die Membran 4 sind mit ebenen zueinander weisenden Flächen ausgebildet, sodass eine zwischen der Membran 4 und der Anpassungsschicht 7 angeordnete Klebeschicht 9 über ihre komplette Erstreckung eine konstante Dicke aufweist.

Die Anpassungsschicht 7 ist im vorliegenden Ausführungsbeispiel als sogenannte Anpassungskeramik ausgebildet, die einen gestuften Übergang der thermischen Ausdehnungskoeffizienten zwischen dem Piezoantrieb 2 und der Membran 4 gewährleisten soll.

Der Wärmeausdehnungskoeffizient der typischer Weise aus Edelstahl bestehenden Membran 4 liegt bei etwa 16 × 10⁻⁶ K⁻¹ wobei der Wärmeausdehnungskoeffizient der piezoelektrischen Sendeund/oder Empfangseinheit Z typischer Weise im Bereich von 4 × 10⁻⁶ K⁻¹ liegt. Durch eine Anpassungsschicht 7 aus Material mit einem Wärmeausdehnungskoeffizienten von etwa 8 × 10⁻⁶ K⁻¹ kann der Unterschied in der thermischen Ausdehnung von Membran 4 und Piezoantrieb 2, der sich etwa um einem Faktor 4 unterscheidet aufeinander angepasst werden. Der Piezoantrieb 2 ist seinerseits mit der Anpassungsschicht 7 verklebt, sodass die Anpassungsschicht 7 die mechanischen Schwingungen des Piezoantriebs 2 auf die Membran 4 übertragen kann. Zusätzlich gewährleistet eine keramische Anpassungsschicht 7 eine elektrische Isolation zwischen an dem Piezoantrieb 2 vorgesehenen Elektroden, die zur Ansteuerung des Piezoantriebs 2 dienen und der metallischen Membran 4 sowie der daran angeordneten Schwinggabel 5.

Bei dem aus dem Stand der Technik bekannten Vibrationsgrenzschaltern mit dem oben beschriebenen Aufbau wird es als nachteilig empfunden, dass trotz der Anpassungsschicht 7 häufig Risse in der Klebeschicht 9 auftreten. Diese Risse in der Klebeschicht 9 werden auf thermisch induzierte Scherkräfte zurückgeführt, die trotz einer Anpassung der thermischen Ausdehnungskoeffizienten der verwendeten Materialien zu einer Ermüdung der Klebeschicht 9 führen sodass eine Rissbildung und damit ein Defekt des Vibrationsgrenzschalters 1 nicht verhindert werden können.

Als weiterer Stand der Technik werden die US 2006/290524 A1 und die DE 197 20 519 A1 genannt.

Es ist die Aufgabe der vorliegenden Erfindung die Nachteile aus dem Stand der Technik zu beseitigen und einen verbesserten Vibrationsgrenzschalter zur Verfügung zu stellen.

Diese Aufgabe wird durch einen Vibrationsgrenzschalter mit den Merkmalen des Patentanspruchs 1 gelöst.

Ein erfindungsgemäßer Vibrationsgrenzschalter weist eine piezoelektrische Sende- und/oder Empfangseinheit, eine in Schwingung versetzbare Membran und eine mechanische Schwingungsanordnung, die mit der Membran gekoppelt ist, auf, wobei die piezoelektrische Sende- und/oder Empfangseinheit direkt oder über eine Anpassungsschicht mittels einer Klebeschicht mit der Membran verklebt ist, wobei die Klebeschicht zwischen der Membran und der Sende- und/oder Empfangseinheit oder der Anpassungsschicht in einem Randbereich eine im Vergleich zur einem Zentralbereich erhöhte Dicke aufweist.

Eine besonders günstige und unmittelbare Übertragung von Schwingungen der Sende- und/oder Empfangseinheit auf die Membran kann erreicht werden, wenn die Sende- und/oder Empfangseinheit oder die Anpassungsschicht in dem Zentralbereich in unmittelbarem Kontakt mit der Membran ist.

Durch eine Auflage der Sende- und/oder Empfangseinheit bzw. der Anpassungsschicht in dem Zentralbereich auf der Membran bzw. durch einen definiert vorgegebenen Abstand in diesem Zentralbereich lässt sich insbesondere die Dicke der Klebeschicht im Randbereich exakt einstellen.

Als Zentralbereich wird in der vorliegenden Anmeldung eine um den geometrischen Schwerpunkt der als ebene Flächen angenommenen der Membran, der Anpassungsschicht und der piezoalektrische Sende- und/oder Empfangseinheit angeordnete Fläche verstanden. Als Randbereich wird eine ring- oder rahmenförmige Fläche verstanden, die um den Zentralbereich umlaufend im Bereich der äußeren Kontur der vorbezeichneten Bauelemente angeordnet ist.

Es hat sich gezeigt, dass Längenänderungen aufgrund einer thermischen Ausdehnung der Membran und eine im Vergleich dazu geringeren thermischen Ausdehnung der Anpassungsschicht bzw. des piezoelektrischen Antriebs besonders in einem Randbereich der aneinander grenzenden Schichten zu erhöhten Scherkräften und Rissbildung führen. Dadurch, dass in diesem Bereich eine erhöhte Dicke der Klebeschicht vorgesehen ist, wird erreicht, dass die Klebeschicht in diesem Bereich die entstehenden Scherkräfte besser aufnehmen kann, wodurch eine verminderte Rissbildung erreicht werden kann. Dadurch, dass in dem Zentralbereich eine verringerte Dicke der Klebeschicht vorgesehen ist, wird außerdem erreicht, dass die Schwingungen der Sendeund/oder Empfangseinheit möglichst verlustfrei auf die Membran übertragen werden.

Eine Anpassung der Dicke der Klebeschicht wird bevorzugt dadurch realisiert, dass die Membran in dem Zentralbereich eine größere Dicke als in dem Randbereich aufweist.

Bevorzugt nimmt die Dicke der Membran ausgehend von dem Randbereich zum Zentralbereich hin und in Richtung der piezoelektrischen Sende- und/oder Empfangseinheit zu, d.h. dass eine der piezoelektrischen Sende- und/oder Empfangseinheit abgewandte Fläche der Membran im Wesentlichen plan ausgebildet ist und eine Zunahme der Dicke der Membran ausschließlich oder wenigstens hauptsächlich in Richtung der piezoelektrischen Sendeund/oder Empfangseinheit ansteigt.

In einer vorteilhaften Ausgestaltung ist vorgesehen, dass die Dicke der Membran ausgehend von dem Randbereich kontinuierlich zunimmt. Eine kontinuierliche Änderung der Dicke der Membran ausgehend von dem Randbereich hat den Vorteil, dass in der Klebeschicht keine Kanten oder sprungartigen Veränderungen der Membran eingebettet sind, die als Kristallisationspunkt für das Entstehen von Rissen in der Klebeschicht dienen könnten.

Es kann aber auch vorgesehen sein, dass sich die Dicke der Membran sprungartig ändert. Eine sprungartige Änderung der Membrandicke kann insbesondere aus Gründen der Vereinfachung des Herstellungsprozesses sinnvoll sein. Auf diese Weise wird insbesondere eine planparallele Ausrichtung der piezoelektrischen Sende- und/oder Empfangseinheit und der Membran erleichtert. Die Membran kann dazu beispielsweise gestuft ausgebildet sein. Durch eine gestufte Ausbildung der Membran, d.h. dass der Zentralbereich der Membran im Wesentlichen als eine Art Plateau ausgebildet ist, kann zwischen der Plateaufläche und der piezoelektrischen Sende- und/oder Empfangseinheit bzw. der Anpassungsschicht besonders einfach eine planparallele Ausrichtung erfolgen.

Eine sprungartige Zunahme der Dicke der Membran kann beispielsweise gestuft in einer oder mehreren Stufen ausgebildet werden.

Bei einer kontinuierlichen Zunahme der Dicke der Membran kann diese in einem Klebebereich oder insgesamt im Wesentlichen kegelstumpfförmig ausgebildet sein. Durch eine kegelstumpfförmige Ausbildung der Membrankontur wird erreicht, dass einerseits ein kontinuierlicher Übergang zwischen dem Randbereich und dem Zentralbereich erfolgt und andererseits in dem Zentralbereich durch eine plane Oberseite des Kegelstumpfes eine gute planparallele Ausrichtung der piezoelektrischen Sende- und/oder Empfangseinheit bzw. Anpassungsschicht und der Membran erfolgen kann.

Für eine kontinuierliche Zunahme der Dicke der Membran kann diese beispielsweise auch kegelförmig oder kalottenförmig ausgebildet sein.

Es ist festzuhalten, dass eine Vielzahl von Ausgestaltungen für eine Membrangeometrie mit kontinuierlich oder sprungartig zunehmender Dicke der Membran möglich sind und die vorgenannten bevorzugten Ausführungsformen lediglich beispielhaft verstanden werden sollen, jedoch die jeweils angeführten spezifischen Vorteile aufweisen.

Besonders vorteilhaft sind Ausgestaltungen bei denen eine der Sende- und/oder Empfangseinheit zugewandte Seite der Membran in dem Zentralbereich abgeflacht ausgebildet ist. Wie bereits mehrfach angeführt kann durch eine abgeflachte Ausbildung der Membran in dem Zentralbereich eine planparallele Ausrichtung von Sende- und/oder Empfangseinheit bzw. Anpassungsschicht und Membran vereinfacht werden.

Um eine bessere Haftfestigkeit zwischen der Membran und der Klebeschicht zu erreichen ist es vorteilhaft, wenn die Membranoberfläche angeraut ist.

Alternativ dazu kann zwischen der Membran und der Sende- und/oder Empfangseinheit oder der Anpassungsschicht in dem Zentralbereich eine Klebeschicht vorbestimmter Dicke vorgesehen sein. Auf diese Weise kann ein Vibrationsgrenzschalter mit gleichbleibenden Eigenschaften erreicht werden, wobei durch eine vollflächige Klebung auch in dem Zentralbereich eine gute Ankopplung der Sende- und/oder Empfangseinheit bzw. der Anpassungsschicht an die Membran erfolgt.

Die vorbestimmte Dicke der Klebeschicht kann beispielsweise durch einen in der Klebeschicht enthaltenen Füllstoff erreicht werden. Werden dem Klebstoff beispielsweise Glaskügelchen eines bestimmten Durchmessers beigemischt, so kann der Durchmesser dieser Glaskügelchen zur Einstellung des Abstands dienen, wobei die Glaskügelchen dann als Abstandshalter im Zentralbereich fungieren.

Durch eine definierte Klebeviskosität kann auch ohne mechanische Abstandshalter eine definierte Dicke der Klebeschicht im Zentralbereich eingestellt werden.

Die Erfindung wird nachfolgend anhand verschiedener Ausführungsbeispiele und Bezugnahme auf die beigefügten Figuren eingehend erläutert.

Es zeigen:
- Figur 1: einen Vibrationsgrenzschalter gemäß dem Stands der Technik (schon behandelt) und
- Figur 2: verschiedene Ausgestaltungen von erfindungsgemäßen Vibrationsgrenzschaltern.

In Figur 2 sind vier bevorzugte Ausführungsbeispiele eines erfindungsgemäßen Vibrationsgrenzschalters eingezeichnet, wobei der Grundaufbau des Vibrationsgrenzschalters 1 im Wesentlichen dem im Zusammenhang mit dem Stand der Technik beschriebenen Aufbau gemäß Figur 1 entspricht.

Die gezeigten Ausführungsbeispiele unterscheiden sich vom Stand der Technik dadurch, dass eine konturierte Membran 4 vorgesehen ist und dadurch eine Dicke d der Klebeschicht zwischen der Membran 4 und der damit verklebten Anpassungsschicht 7 variiert. Auf der Anpassungsschicht 7 ist, wie auch im Stand der Technik, die piezoelektrische Sende- und/oder Empfangseinheit 2 (nachfolgend auch Piezoantrieb genannt) angeordnet.

Wie den Figuren 2a bis d entnommen werden kann weist die Membran 4 in einem Zentralbereich Z, d.h. in einem Bereich rund um das Zentrum bzw. den Flächenschwerpunkt der Membran eine im Vergleich zu einem Randbereich, der ring- oder rahmenförmig um diesen Zentralbereich angeordnet ist, eine erhöhte Dicke auf. Bei einer planparallelen Ausrichtung der piezoelektrischen Sende- und/oder Empfangseinheit 2 sowie der Anpassungsschicht 7 zu einer dem Piezoantrieb 2 abgewandten Fläche der Membran 4 wird dadurch automatisch eine erhöhte Dicke d der Klebeschicht 9 zwischen der Anpassungsschicht 7 und der Membran 4 in dem Randbereich R eingestellt.

Figur 2a zeigt ein Ausführungsbeispiel eines Vibrationsgrenzschalters 1 bei dem die Membran 4 im Querschnitt eine Kontur mit stufenförmig verdicktem Zentralbereich Z aufweist. Die Klebeschicht 9 ist dadurch in dem Zentralbereich Z wesentlich dünner ausgebildet als in dem Randbereich R.

Bei einer kreisförmig ausgebildeten Membran 4 werden auf diese Weise in Radialrichtung wirkende Schwerkräfte durch die im Randbereich R dicker ausgebildete Klebeschicht 9 verbessert aufgenommen, sodass eine deutliche Reduzierung einer ansonsten zu befürchtenden Rissbildung erreicht wird.

In Figur 2b ist eine Membran 4 mit einer Kontur wie in Figur 2a gezeigt, wobei die Anpassungsschicht 7 in dem Zentralbereich Z unmittelbar auf der Membran 4 aufsitzt und eine Klebung ausschließlich in dem ringförmig um den Zentralbereich Z verlaufenden Randbereich R erfolgt. Durch einen unmittelbaren Kontakt der Anpassungsschicht 7 mit der Membran 4 in dem Zentralbereich Z kann besonders einfach eine planparallele Ausrichtung zwischen der Membran 4 und der Anpassungsschicht 7 sowie dem damit verbundenen Piezoantrieb 2 erreicht werden.

Figur 2c zeigt eine Ausgestaltung des Vibrationsgrenzschalters 1 mit einer Membran 4 die eine kegelstumpfförmige Kontur aufweist. Durch eine kegelstumpfförmige Ausbildung der Membran 4 kann die Anpassungsschicht 7, wie in den Figuren 2a und 2b gezeigt, entweder unmittelbar oder mit einem definierten Abstand zur Deckfläche des Kegelstumpfes in dem Zentralbereich Z angeordnet werden. Ausgehend von dem Zentralbereich Z nimmt dann die Dicke d der Klebeschicht 9 in Richtung Randbereich R kontinuierlich zu, wobei am Umfang der Anpassungsschicht 7 eine maximale Dicke d der Klebeschicht 9 erreicht wird.

Bei dem in Figur 2d gezeigten Ausführungsbeispiel ist die Membran 4 mit einer kegelförmigen Kontur ausgebildet. Durch eine kegelförmige Ausbildung der Membran 4 wird, ähnlich wie bei dem in Figur 2c gezeigten Ausführungsbeispiel, ein kontinuierlicher Zuwachs der Dicke d der Klebeschicht 9 ausgehend von dem Zentralbereich Z hin zu dem Randbereich R erreicht.

Es wird nochmals darauf hingewiesen, dass die Dicke d der Klebeschicht 9 in dem Zentralbereich entweder einen durch beispielsweise mechanischen Abstandshalter oder eine definierte Viskosität des Klebers eingestellten Abstand aufweisen oder auf eine Klebung im Zentralbereich Z verzichtet werden kann. Durch eine abgeflachte Ausbildung der Kontur der Membran 4 in dem Zentralbereich Z kann insbesondere eine planparallele Ausrichtung des Piezoantriebs 2 zu der Membran respektive deren dem Piezoantrieb 2 abgewandeten Fläche, erreicht werden.

### Bezugszeichenliste

- 1: Vibrationsgrenzschalter
- 2: piezoelektrische Sende- und/oder Empfangseinheit / Piezoantrieb
- 4: Membran
- 5: mechanische Schwingungsanordnung / Schwinggabel
- 7: Anpassungsschicht
- 9: Klebeschicht

- Z: Zentralbereich
- R: Randbereich
- d: Dicke

## Patentansprüche

1. Vibrationsgrenzschalter (1) mit
einer piezoelektrischen Sende- und/oder Empfangseinheit (2) einer in Schwingung versetzbaren Membran (4) und einer mechanischen Schwingungsanordnung, die mit der Membran (4) gekoppelt ist, wobei
die piezoelektrische Sende- und/oder Empfangseinheit (2) direkt oder über eine Anpassungsschicht (7) mittels einer Klebeschicht (9) mit der Membran (4) verklebt ist, **dadurch gekennzeichnet, dass**
die Klebeschicht (9) zwischen der Membran (4) und der Sende- und/oder Empfangseinheit (2) oder der Anpassungsschicht (7) in einem Randbereich (R) eine im Vergleich zu einem Zentralbereich (Z) erhöhte Dicke aufweist.

2. Vibrationsgrenzschalter (1) nach Anspruch 1,
**dadurch gekennzeichnet, dass**
zwischen der Membran (4) und der Sende- und/odex Empfangseinheit (2) oder der Anpassungsschicht (7) in dem Zentralbereich (Z) eine Klebeschicht (9) vorbestimmter Dicke angeordnet ist.

3. Vibrationsgrenzschalter (1) nach Anspruch 2,
**dadurch gekennzeichnet, dass**
die vorbestimmte Dicke durch einen in der Klebeschicht (9) enthaltenen Füllstoff vorgegeben ist.

4. Vibrationsgrenzschalter (1) mit
einer piezoelektrischen Sende- und/oder Empfangseinheit (2) einer in Schwingung versetzbaren Membran (4) und einer mechanischen Schwingungsanordnung, die mit der Membran (4) gekoppelt ist, wobei
die piezoelektrische Sende- und/oder Empfangseinheit (2) direkt oder über eine Anpassungsschicht (7) mittels einer Klebeschicht (9) mit der Membran (4) verklebt ist, **dadurch gekennzeichnet, dass** die Sende- und/oder Empfangseinheit (2) oder die Anpassungsschicht (7) in dem Zentralbereich (Z) in unmittelbarem Kontakt mit der Membran (4) ist und nur in einem Randbereich (R)eine Klebeschicht (9) zwischen der Membran (4) und der Sende- und/oder Empfangseinheit (2) oder der Anpassungsschicht (7) aufweist.

5. Vibrationsgrenzschalter (1) nach einem der vorhergehenden Ansprüche,
**dadurch gekennzeichnet, dass**
die Membran (4) in dem Zentralbereich (Z) eine größere Dicke (d) als in dem Randbereich (R) aufweist.

6. Vibrationsgrenzschalter (1) nach einem der vorhergehenden Ansprüche,
**dadurch gekennzeichnet, dass**
die Dicke (d) der Membran (4) ausgehend von dem Randbereich (R) kontinuierlich zunimmt.

7. Vibrationsgrenzschalter (1) nach einem der Ansprüche 1 bis 5,
**dadurch gekennzeichnet, dass**
die Dicke (d) der Membran (4) sprungartig zunimmt.

8. Vibrationsgrenzschalter (1) nach Anspruch 7,
**dadurch gekennzeichnet, dass**
die Membran (4) gestuft ausgebildet ist.

9. Vibrationsgrenzschalter (1) nach Anspruch 6,
**dadurch gekennzeichnet, dass**
die Membran (4) kegelstumpfförmig ausgebildet ist.

10. Vibrationsgrenzschalter (1) nach Anspruch 6,
**dadurch gekennzeichnet, dass**
die Membran (4) kegelförmig ausgebildet ist.

11. Vibrationsgrenzschalter (1) nach Anspruch 6,
**dadurch gekennzeichnet, dass**
die Membran (4) kalottenförmig ausgebildet ist.

12. Vibrationsgrenzschalter (1) nach einem der Ansprüche 1 bis 9,
**dadurch gekennzeichnet, dass**
eine der Sende- und/oder Empfangseinheit (2) zugewandte Seite der Membran (4) in dem Zentralbereich (Z) abgeflacht ausgebildet ist.

13. Vibrationsgrenzschalter (1) nach einem der vorhergehenden Ansprüche,
**dadurch gekennzeichnet, dass**
Membranoberfläche angeraut ist.

## Claims

1. Vibration limit switch (1) comprising a piezoelectric transmitting and/or receiving unit (2), a membrane (4) that can be put in oscillation and a mechanical oscillation arrangement, which is coupled to the membrane (4), the piezoelectric transmitting and/or receiving unit (2) being adhered to the membrane (4) directly or via an adaptation layer (7) by means of an adhesive layer (9), **characterized in that** the adhesive layer (9) between the membrane (4) and the transmitting and/or receiving unit (2) or the adaptation layer (7) has a thickness in an edge area (R) which is elevated in comparison to a central area (Z).

2. Vibration limit switch (1) according to claim 1, **characterized in that** an adhesive layer (9) of pre-determined thickness is arranged between the membrane (4) and the transmitting and/or receiving unit (2) or the adaptation layer (7) in the central area (Z)

3. Vibration limit switch (1) according to claim 2, **characterized in that** the pre-determined thickness is given by a filler contained in the adhesive layer (9).

4. Vibration limit switch (1) comprising a piezoelectric transmitting and/or receiving unit (2), a membrane (4) that can be put in oscillation and a mechanical oscillation arrangement, which is coupled to the membrane (4), the piezoelectric transmitting and/or receiving unit (2) being adhered to the membrane (4) directly or via an adaptation layer (7) by means of an adhesive layer (9), **characterized in that** the transmitting and/or receiving unit (2) or the adaptation layer (7) is in direct contact with the membrane (4) in the central area (Z) and only in an edge area (R) has an adhesive layer (9) between the membrane (4) and the transmitting and/or receiving unit (2) or the adaptation layer (7).

5. Vibration limit switch (1) according to any one of the above claims, **characterized in that** the membrane (4) has a greater thickness (d) in the central area (Z) than in the edge area (R).

6. Vibration limit switch (1) according to any one of the above claims, **characterized in that** the thickness (d) of the membrane (4) continuously increases starting from the edge area (R).

7. Vibration limit switch (1) according to any one of claims 1 to 5, **characterized in that** the thickness (d) of the membrane (4) increases abruptly.

8. Vibration limit switch (1) according to claim 7, **characterized in that** the membrane (4) is constructed in a graduated manner.

9. Vibration limit switch (1) according to claim 6, **characterized in that**
the membrane (4) is constructed in the shape of a truncated cone.

10. Vibration limit switch (1) according to claim 6,
**characterized in that**
the membrane (4) is constructed in the shape of a cone.

11. Vibration limit switch (1) according to claim 6, **characterized in that** the membrane (4) is constructed in the shape of a dome.

12. Vibration limit switch (1) according to any one of claims 1 to 9, **characterized in that** a side of the membrane (4) facing the transmitting and/or receiving unit (2) is constructed flattened in the central area (Z).

13. Vibration limit switch (1) according to any one of the above claims, **characterized in that** the membrane surface is roughened.

## Revendications

1. Détecteur vibrant (1) comprenant une unité d'émission et/ou de réception piézoélectrique (2) une membrane (4) pouvant être mise en oscillation et un dispositif d'oscillation mécanique qui est accouplé à la membrane (4), dans lequel
l'unité d'émission et/ou de réception piézoélectrique (2) est collée à la membrane (4) directement ou par l'intermédiaire d'une couche d'adaptation (7) au moyen d'une couche de colle (9),
**caractérisé en ce que**
la couche de colle (9) située entre la membrane (4) et l'unité d'émission et/ou de réception (2) ou la couche d'adaptation (7), présente dans une zone de bord (R) une épaisseur augmentée par rapport à la zone centrale (Z).

2. Détecteur vibrant (1) conforme à la revendication 1,
**caractérisé en ce qu'**
entre la membrane (4) et l'unité d'émission et/ou de réception (2) ou la couche d'adaptation (7) est appliquée dans la zone centrale (Z) une couche de colle (9) ayant une épaisseur prédéfinie.

3. Détecteur vibrant (1) conforme à la revendication 2,
**caractérisé en ce que**
l'épaisseur prédéfinie est prédéfinie par une charge renfermée dans la couche de colle (9).

4. Détecteur vibrant (1) comprenant une unité d'émission et/ou de réception piézoélectrique (2), une membrane (4) pouvant être mise en oscillation et un dispositif d'oscillation mécanique qui est accouplé à la membrane, dans lequel
l'unité d'émission et/ou de réception piézoélectrique (2) est collée à la membrane (4) directement ou par l'intermédiaire d'une couche d'adaptation (7) au moyen d'une couche de colle (9),
**caractérisée en ce que**
l'unité d'émission et/ou de réception (2) ou la couche d'adaptation (7) est en contact direct avec la membrane (4) dans la zone centrale (Z) et ne comporte une couche de colle (9) entre la membrane (4) et l'unité d'émission et/ou de réception (2) ou la couche d'adaptation (7) que dans une zone de bord (R).

5. Détecteur vibrant (1) conforme à l'une des revendications précédentes,
**caractérisé en ce que**
la membrane (4) a une plus grande épaisseur (d) dans la zone centrale (Z) que dans la zone de bord (R).

6. Détecteur vibrant (1) conforme à l'une des revendications précédentes,
**caractérisé en ce que**
l'épaisseur (d) de la membrane (4) augmente de manière continue à partir de la zone de bord (R).

7. Détecteur vibrant (1) conforme à l'une des revendications 1 à 5,
**caractérisé en ce que**
l'épaisseur (d) de la membrane (4) augmente par à-coups.

8. Détecteur vibrant (1) conforme à la revendication 7,
**caractérisé en ce que**
la membrane est réalisée en gradins.

9. Détecteur vibrant (1) conforme à la revendication 6,
**caractérisé en ce que**
la membrane (4) est réalisée en forme de tronc de cône.

10. Détecteur vibrant (1) conforme à la revendication 6,
**caractérisé en ce que**
la membrane (4) est réalisée en forme de cône.

11. Détecteur vibrant (1) conforme à la revendication 6,
**caractérisé en ce que**
la membrane (4) est réalisée en forme de calotte.

12. Détecteur vibrant (1) conforme à l'une des revendications 1 à 9,
**caractérisé en ce que**
le côté de la membrane (4) tourné vers l'unité d'émission et/ou de réception (2) est aplatie dans la zone centrale (Z)

13. Détecteur vibrant (1) conforme à l'une des revendications précédentes,
**caractérisé en ce que**
la surface de la membrane est rugueuse.
